# EUROPÄISCHE PATENTSCHRIFT

(11) **EP 0 579 122 B1**
(45) Veröffentlichungstag und Bekanntmachung des Hinweises auf die Patenterteilung: **28.02.1996**
(21) Anmeldenummer: 93110970.6
(22) Anmeldetag: 09.07.1993
(51) Int. Cl.: B60R 16/02, H01R 35/02

(54) **Vorrichtung zur Signalübertragung zwischen zwei Endstellen**
Device for transmitting signals between two terminals
Dispositif de transmission de signaux entre deux terminaux

(30) Priorität: 16.07.1992 DE 4223441; 06.10.1992 DE 4233499
(43) Veröffentlichungstag der Anmeldung: 19.01.1994
(73) Patentinhaber: kabelmetal electro GmbH, D-30002 Hannover (DE)
(72) Erfinder: Schauer, Friedrich, Dipl.-Ing., D-8501 Heroldsberg (DE); Neuner, Andreas, D-8500 Nürnberg (DE)
(74) Vertreter: Döring, Roger

(56) Entgegenhaltungen:
- DE-A- 4 129 450
- FR-A- 2 045 048
- US-A- 4 919 620
- US-A- 4 975 064

## Beschreibung

Die Erfindung bezieht sich auf eine Vorrichtung zur Signalübertragung zwischen zwei Endstellen, zwischen denen eine in Windungen verlaufende und in einer im wesentlichen kreisförmigen Kassette untergebrachte Leitung angeordnet ist, an die weiterführende Leitungen an den beiden Endstellen anschließbar sind und deren Länge wesentlich größer als der Abstand der beiden Endstellen voneinander ist, bei welcher mindestens eine der beiden Endstellen relativ zu der anderen bewegbar ist, bei welcher die Kassette aus zwei konzentrisch zueinander angeordneten Teilen besteht, einem um die Achse der Kassette drehbaren Rotor und einem die Leitung aufnehmenden, feststehenden Stator, bei welcher sowohl am Rotor als auch am Stator ein sich in Umfangsrichtung erstreckender, ringförmig geschlossener Kranz von Vorsprüngen angebracht ist, bei welcher Rotor und Stator durch axiale Verschiebung relativ zueinander alternativ in einer Montageposition der Kassette einerseits und einer Arbeitsposition derselben andererseits angeordnet sind, bei welcher die beiden Kränze mit Vorsprüngen in der Montageposition ineinander greifen und bei welcher die beiden Kränze mit Vorsprüngen in der Arbeitsposition ohne gegenseitigen Eingriff in unterschiedlichen Ebenen liegen (US-A-4 919 620).

Eine derartige Vorrichtung wird beispielsweise für die Übertragung eines Signals zum Auslösen des "Airbag" eines Prallschutzes für Kraftfahrzeuge benötigt. Sie ist zur Übertragung eines elektrischen oder optischen Signals im Lenkrad eines Kraftfahrzeugs untergebracht. "Leitung" im Sinne der Erfindung kann also eine elektrische oder eine optische Leitung sein. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Aus der EP-A-0 417 350 geht eine Vorrichtung zur Signalübertragung zwischen zwei Endstellen hervor, bei welcher für die Signalübertragung elektrischer Strom verwendet wird. Die Stromübertragung erfolgt durch eine beispielsweise nach Art eines Federhauses gewickelte Flachband-Leitung - im folgenden kurz als "FBL" bezeichnet. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Für den Einbau dieser Vorrichtung in das Lenkrad eines Kraftfahrzeugs ist es daher von Bedeutung, daß die beiden Endstellen eine ganz bestimmte Position zueinander haben, mit einer entsprechenden Position der FBL, damit die vorgegebenen Umdrehungen des Rotors in beiden Drehrichtungen des Lenkrades möglich sind, ohne daß die FBL von den Endstellen abgerissen oder sonstwie zerstört wird.

Bei der Vorrichtung nach der eingangs erwähnten US-A-4 919 620 weisen die Vorsprünge der beiden Kränze mit Vorsprüngen in axialer Richtung der Kassette. Im Bereich der Kränze mit Vorsprüngen sind zwischen Stator und Rotor in axialer Richtung wirkende Federn angebracht. Die Federn drücken die beiden Kränze mit Vorsprüngen in der Montageposition der Kassette so gegeneinander, daß ihre Vorsprünge ineinander greifen. Rotor und Stator der Kassette können dann nicht relativ zueinander gedreht werden. In der Arbeitsposition der Kassette werden die Federn zusammengedrückt. Die beiden Kränze mit Vorsprüngen werden dadurch voneinander gelöst, so daß der Rotor im Stator gedreht werden kann.

Der Erfindung liegt die Aufgabe zugrunde, die eingangs geschilderte Vorrichtung so zu gestalten, daß die Montageposition und die Arbeitsposition der Kassette auf einfache Weise eingestellt werden können.

Diese Aufgabe wird gemäß der Erfindung dadurch gelöst, daß am Rotor mit axialem Abstand zu dessen Kranz mit Vorsprüngen ein umlaufender, in Richtung des Stators weisender Vorsprung angebracht ist, der in der Arbeitsposition der Kassette zwischen den beiden Kränzen mit Vorsprüngen liegt und ein Ineinandergreifen derselben verhindert.

In dieser Vorrichtung sind Rotor und Stator der Kassette durch die beiden Kränze mit Vorsprüngen in der Montageposition der Kassette fixiert, die für den Einbau in das Lenkrad eines Kraftfahrzeugs vorgegeben ist. Die ineinander greifenden Vorsprünge von Rotor einerseits und Stator andererseits stellen sicher, daß diese beiden Teile nicht gegegeneinander verdreht werden können. Die Montageposition bleibt solange erhalten, bis beispielsweise durch Druck auf den Rotor dieser axial gegenüber dem Stator verschoben wird. Die beiden Kränze mit den Vorsprüngen werden dadurch in unterschiedliche Ebenen gebracht, in denen sie wegen des zwischen ihnen liegenden umlaufenden Vorsprungs nicht mehr in Eingriff miteinander stehen. In der damit gewonnenen Arbeitsposition der Kassette ist der Rotor frei und ohne schleifende Geräusche gegenüber dem Stator drehbar. In dieser Arbeitsposition kann der Rotor gleichzeitig über Rastelemente am Lenkrad eines Fahrzeugs festgelegt werden. Montageposition und Arbeitsposition der Kassette geben zwei stabile Lagen von Rotor und Stator relativ zueinander an, aus denen diese beiden Teile unter Überwindung des umlaufenden Vorsprungs nur durch Krafteinwirkung herausbewegt werden können.

Zur besseren Handhabung der Vorrichtung können an der Stirnseite des Rotors mindestens zwei, in Umfangsrichtung der Kassette gegeneinander versetzte und in deren Achsrichtung nach außen abstehende stabförmige Vorsprünge mit federnden Elementen angebracht sein, die bei montierter Kassette in korrespondierenden Ausnehmungen eines auf die Kassette aufgesetzten Bauteils lösbar eingerastet sind. Wenn die Kassette beispielsweise für Reparaturzwecke wieder ausgebaut werden soll, wird sie mittels der stabförmigen Vorsprünge auf einfache Weise in ihre Montageposition gebracht. Beim Abheben des Lenkrads wird der Rotor durch die stabförmigen Vorsprünge angehoben und dadurch wieder axial gegenüber dem Stator verschoben, bis die Montageposition erreicht ist. Danach lösen sich die stabförmigen Vorsprünge vom Lenkrad. Die Kassette kann in der vorgegebenen Montageposition ausgebaut werden.

Weitere vorteilhafte Ausgestaltungen der Erfindung gehen aus den Unteransprüchen hervor.

Ausführungsbeispiele des Erfindungsgegenstandes sind in den Zeichnungen dargestellt.

Es zeigen:
Fig. 1 schematisch einen Querschnitt durch eine Kassette mit einer Vorrichtung nach der Erfindung.
Fig. 2 eine Draufsicht auf die Kassette, teilweise im Schnitt.
Fig. 3 einen Querschnitt durch die Kassette in Montageposition.
Fig. 4 einen Querschnitt durch die Kassette in Arbeitsposition.
Fig. 5 und 6 ein Einzelteil der Vorrichtung in vergrößerter Darstellung.

Die Erfindung wird im folgenden für eine Kassette beschrieben, in der eine Flachbandleitung (FBL) mit elektrischen Leitern angebracht ist. Statt der FBL könnte aber auch eine Leitung mit mindestens einem Lichtleiter eingesetzt werden. Auch eine kombinierte Leitung mit elektrischen und optischen Leitern könnte verwendet werden. Stellvertretend für alle anderen Möglichkeiten wird im folgenden von einer FBL mit elektrischen Leitern ausgegangen.

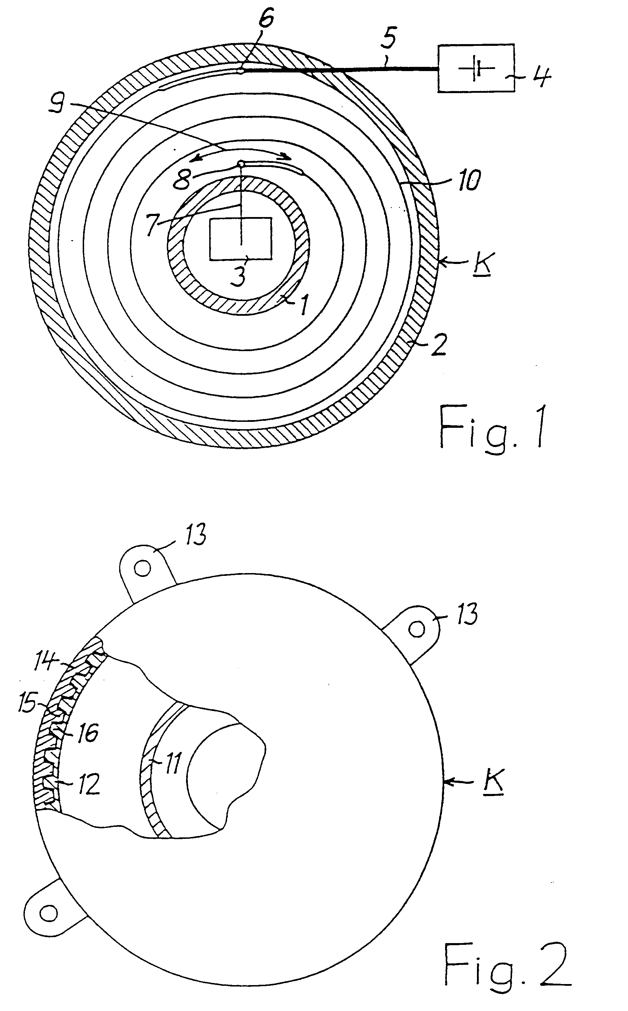

In Fig. 1 sind schematisch zwei beispielsweise kreisförmig ausgebildete Wände 1 und 2 einer Kassette K dargestellt. Sie ist für den Einbau in das Lenkrad eines Kraftfahrzeugs bestimmt. Zur Stromversorgung einer Elektronik 3, durch deren Signal ein Prallsack ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine FBL 10 mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses bzw. Abschlusses an den Endstellen 6 und 8 sind nicht genauer dargestellt. Sie sind prinzipiell in unterschiedlichen Varianten bekannt und hier nicht von Bedeutung.

Die FBL 10 kann gemäß Fig. 1 in der Kassette K zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert.

Die Kassette K besteht gemäß den Fig. 2 bis 4 aus einem Rotor 11 und einem Stator 12, die konzentrisch zueinander angeordnet sind. Der Stator 12 kann über Laschen 13 an feststehenden Teilen einer Lenksäule eines Kraftfahrzeugs befestigt werden. Der Rotor 11 ist mit drehbaren Teilen des Lenkrades des Kraftfahrzeugs verbunden. Er ist im dargestellten Ausführungsbeispiel i. w. innerhalb des ringförmig gestalteten Stators 12 angeordnet und umfaßt denselben von außen in Form einer Haube 14. Der Rotor 11 kann einschließlich Haube 14 einteilig ausgeführt sein. Die Haube 14 kann aber auch gesondert hergestellt und mit dem restlichen Teil des Rotors 11 beispielsweise durch Verschweißen fest verbunden werden. Zwischen Rotor 11 und Stator 12 befindet sich die FBL 10. Sie wird i. w. vom Stator 12 aufgenommen.

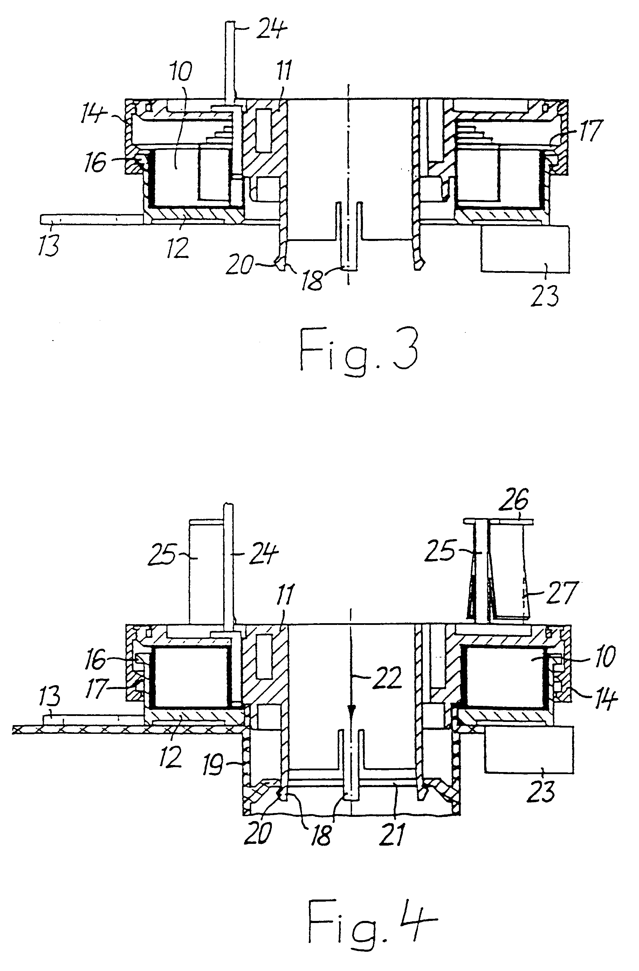

Sowohl am Rotor 11 als auch am Stator 12 ist ein sich in Umfangsrichtung erstreckender, ringförmig geschlossener Kranz von Vorsprüngen - im folgenden kurz "Zahnkranz" genannt - angebracht. Im dargestellten Ausführungsbeispiel befindet sich der Zahnkranz 15 des Rotors 11 an der inneren Wandung der Haube 14. Der Zahnkranz 16 des Stators 12 ist an dessen Umfangsfläche angebracht. In der Montageposition der Kassette K liegen die Zahnkränze 15 und 16 gemäß Fig. 3 in einer Ebene. Die Vorsprünge der beiden Zahnkränze 15 und 16 greifen dann ineinander, so wie es in Fig. 2 dargestellt ist. Der Rotor 11 kann dadurch gegenüber dem Stator 12 in der Montageposition der Kassette K nicht gedreht werden. Die Vorsprünge der beiden Zahnkränze 15 und 16 können rechteckig ausgeführt sein, so wie es in Fig. 2 dargestellt ist. Sie können aber auch eine andere Kontur haben und beispielsweise dreieckig sein.

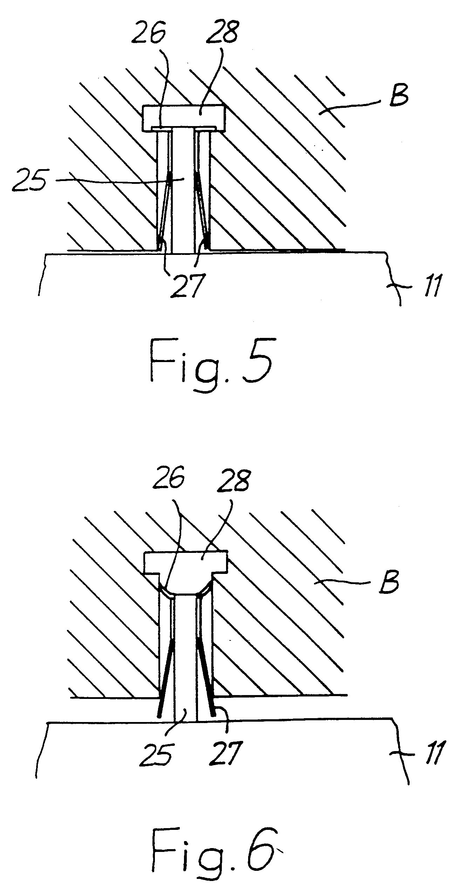

In der Montageposition der Kassette K gemäß Fig. 3 sind Rotor 11 und Stator 12 so zueinander angeordnet, daß die Kassette K lagerichtig in die Lenksäule eines Fahrzeugs eingebaut werden kann. Diese stabile Lage der Kassette K wird zusätzlich durch einen umlaufenden Vorsprung 17 gesichert, der auf einer Seite des Zahnkranzes 15 an der Innenwand der Haube 14 angebracht ist. Er liegt gemäß Fig. 3 und 4 oberhalb des Zahnkranzes 15 und verhindert, daß der Rotor 11 versehentlich gegenüber dem Stator 12 axial verschoben wird. In dieser Montageposition sind die Windungen der FBL 10 etwa stufenförmig auseinandergezogen, da ihr eines Ende am Rotor 11 und ihr anderes Ende am Stator 12 festgelegt sind.

Der Rotor 11 hat an seinem mittleren Teil in axialer Richtung weisende Rastelemente 18, mit denen er in der aus Fig. 4 ersichtlichen Arbeitsposition der Kassette K mit der schematisch angedeuteten Verkleidung 19 der Lenksäule verbunden werden kann. Die Rastelemente 18 liegen in der Arbeitsposition mit ihren Nasen 20 unter einer ringförmigen Erweiterung 21 der Verkleidung 19. Bei einer Drehung des Rotors 11 gleiten die kleinflächigen Nasen 20 an der Erweiterung 21. Die Verbindung von Rotor 11 und Verkleidung 19 bzw. Stator 12 ist mittels der Rastelemente 18 lösbar.

In der Arbeitsposition der Kassette K ist der Rotor 11 gegenüber dem Stator 12 in axialer Richtung so weit verschoben, daß die beiden Zahnkränze 15 und 16 in zwei unterschiedlichen Ebenen liegen. Ihre Zähne bzw. Vorsprünge greifen dann nicht mehr ineinander. Der Rotor 11 ist in der Arbeitsposition frei drehbar. Er kann nicht am Stator 12 schleifen, da der Vorsprung 17 jetzt zwischen den beiden Zahnkränzen 15 und 16 liegt. Rotor 11 und Stator 12 nehmen in der Arbeitsposition der Kassette K ihre zweite stabile Lage zueinander ein.

Diese aus Fig. 4 ersichtliche Arbeitsposition der Kassette K wird durch axialen Druck auf den Rotor 11 in Richtung des Pfeiles 22 erreicht. Vor Verschiebung des Rotors 11 wird zunächst der Stator 12 über die Laschen 13 an feststehenden Teilen der Lenksäule eines Fahrzeugs befestigt. Durch Druck auf den Rotor 11 in Richtung des Pfeiles 22 wird derselbe danach nach unten gedrückt, bis die Rastelemente 18 hinter der Erweiterung 21 der Verkleidung 19 einrasten. Bei der axialen Verschiebung des Rotors 11 wird auch die Haube 14 nach unten gedrückt. Der umlaufende Vorsprung 17 wird dabei durch den Zahnkranz 16 nach außen gedrückt, so daß derselbe passieren kann.

Die FBL 10 ist an ihrem im Stator 12 liegenden Ende in ein Steckgehäuse geführt, in welches eine mit einem Stecker ausgerüstete Leitung eingesteckt werden kann. An das andere, am Rotor 11 liegende Ende der FBL 10 ist eine Leitung 24 angeschlossen.

Bei einem eventuell erforderlichen Ausbau der Kassette K kann deren Montageposition durch Verschiebung des Rotors 11 entgegen der Richtung des Pfeiles 22 wieder erreicht werden. Dabei werden die Rastelemente 18 von der Verkleidung 19 gelöst, so daß die ganze Kassette K entfernt werden kann, wenn auch die Befestigungen an den Laschen 13 des Stators 12 gelöst sind.

Das Zurückziehen des Rotors 11 in die in Fig. 3 dargestellte Montageposition der Kassette K kann besonders einfach mittels eines auf den Rotor 11 aufgesetzten, in den Fig. 5 und 6 angedeuteten Bauteils B durchgeführt werden. Das Bauteil B kann insbesondere das Lenkrad eines Fahrzeugs sein. Ein solches Bauteil B weist Ausnehmungen 28 auf, in welche stabförmige Vorsprünge 25 eingreifen, die an der Stirnseite des Rotors 11 angebracht sind. In Fig. 4 sind zwei stabförmige Vorsprünge 25 dargestellt, die in Umfangsrichtung der Kassette K um 180° gegeneinander versetzt sind. Sie stehen in Achsrichtung der Kassette K von derselben ab. Es können auch mehr als zwei Vorsprünge 25 vorgesehen sein, die jeweils in Umfangsrichtung der Kassette K gegeneinander versetzt sind.

Die Vorsprünge 25 sind gemäß Fig. 5 und 6 mit federnden Elementen 26 und 27 ausgerüstet. Die an den freien Enden der Vorsprünge 25 etwa rechtwinklig abstehenden Elemente 26 dienen als Halteelemente in der schematisch angedeuteten Ausnehmung 28 des Bauteils B. Die Elemente 27 liegen an der Wandung der Ausnehmung 28 an. Sie sollen eine ungewünschte seitwärts gerichtete Bewegung der stabförmigen Vorsprünge 25 in der Ausnehmung 28 verhindern.

In der Arbeitsposition der Kassette K (Fig. 4) liegen die Elemente 26 entsprechend der Darstellung in Fig. 5 hinter einer Hinterschneidung der Ausnehmung 28. Diese Position behalten sie auch bei, wenn der Rotor 11 mittels des Bauteils B, in dem die Ausnehmung 28 angebracht ist, in die Montageposition der Kassette K (Fig. 3) gebracht wird. Wenn das Bauteil B dann weiter von der Kassette K entfernt werden soll, werden die Elemente 26 so verformt, wie es aus Fig. 6 hervorgeht. Sie gleiten dann an der Wandung der Ausnehmung 28 entlang. Das Bauteil B kann dann unbehindert von der Kassette K abgenommen werden.

Die Zahnkränze 15 und 16 sind gemäß Fig. 2 bis 4 im Außenbereich der Kassette K angebracht. Sie könnten auch im Übergangsbereich zwischen Rotor 11 und Stator 12 in der Nähe der Achse der Kassette K angeordnet werden. Die Haube 14 des Rotors 11 könnte dann fortfallen.

## Patentansprüche

1. Vorrichtung zur Signalübertragung zwischen zwei Endstellen (6,8), zwischen denen eine in Windungen verlaufende und in einer im wesentlichen kreisförmigen Kassette (K) untergebrachte Leitung (10) angeordnet ist, an die weiterführende Leitungen an den beiden Endstellen (6,8) anschließbar sind und deren Länge wesentlich größer als der Abstand der beiden Endstellen (6,8) voneinander ist, bei welcher mindestens eine der beiden Endstellen (6,8) relativ zu der anderen bewegbar ist, bei welcher die Kassette (K) aus zwei konzentrisch zueinander angeordneten Teilen besteht, einem um die Achse der Kassette (K) drehbaren Rotor (11) und einem die Leitung aufnehmenden, feststehenden Stator (12), bei welcher sowohl am Rotor (11) als auch am Stator (12) ein sich in Umfangsrichtung erstreckender, ringförmig geschlossener Kranz (15,16) von Vorsprüngen angebracht ist, bei welcher Rotor (11) und Stator (12) durch axiale Verschiebung relativ zueinander alternativ in einer Montageposition der Kassette (K) einerseits und einer Arbeitsposition derselben andererseits angeordnet sind, bei welcher die beiden Kränze (15,16) mit Vorsprüngen in der Montageposition ineinander greifen und bei welcher die beiden Kränze (15,16) mit Vorsprüngen in der Arbeitsposition ohne gegenseitigen Eingriff in unterschiedlichen Ebenen liegen, dadurch gekennzeichnet, daß am Rotor (11) mit axialem Abstand zu dessen Kranz (15) mit Vorsprüngen ein umlaufender, in Richtung des Stators (12) weisender Vorsprung (17) angebracht ist, der in der Arbeitsposition der Kassette (K) zwischen den beiden Kränzen (15,16) mit Vorsprüngen liegt und ein Ineinandergreifen derselben verhindert.

2. Vorrichtung nach Anspruch 1, dadurch gekennzeichnet, daß am Rotor (11) Rastelemente (18) zu seiner Festlegung an der Lenksäule eines Fahrzeugs in der Arbeitsposition der Kassette (K) angebracht sind.

3. Vorrichtung nach Anspruch 1 oder 2, dadurch gekennzeichnet, daß an der Stirnseite des Rotors (11) mindestens zwei, in Umfangsrichtung der Kassette (K) gegeneinander versetzte und in deren Achsrichtung nach außen abstehende stabförmige Vorsprünge (25) mit federnden Elementen (26,27) angebracht sind, die bei montierter Kassette (K) in korrespondierenden Ausnehmungen (28) eines auf die Kassette (K) aufgesetzten Bauteils (B) lösbar eingerastet sind.

## Claims

1. A device for signal transmission between two terminals (6,8), between which a line (10) running in windings is arranged in a box (K) being circular in the main, to said line (10) extending lines are linkable at both terminals (6,8) and the length of which line (10) is essentially larger than the distance of the both terminals (6,8) from each other, in which at least one of the terminals (6,8) is relatively movable with respect to the other and in which the box (K) comprises two parts being concentrically arranged to each other, a rotor (11) being rotatable around the axis of the box (K) and a fixed stator (12) taking up the line (10), in which a circular closed ring (15,16) with protrusions extending in circumferential direction is applied at the rotor (11) as well as at the stator (12), in which the rotor (11) and the stator (12) are arranged by axial movement relatively to each other alternatively in two stable positions of the box (K), a mounting position and a working position of the same, in which the two rings (15,16) with protrusions in the mounting position are gearing into each other and in which the two rings (15,16) with protrusions in the working position are lying in different levels without mutual gearing, characterized in that an annular protrusion (17) showing into the direction of the stator (12) is applied above the ring (15) with protrusions at the rotor (11), said protrusion (17) in the working position of the box (K) is lying between the two rings (15,16) with protrusions.

2. A device according to claim 1, characterized in that locking elements (18) are attached to the rotor (11) to fix its position in the steering column of a vehicle in the working position of the box (K).

3. A device according to claim 1 or 2, characterized in that at least two bar-shaped protrusions (25) with elastical elements (26,27) being staggered in circumferential direction of the box (K) and standing to the outside in axial direction of the same are arranged at the front side of the rotor (11), the protrusions are detachable locked in corresponding recesses (28) of a component (B) put on the box (K).

## Revendications

1. Dispositif de transmission de signaux entre deux positions terminales (6,8) entre lesquelles est disposé un conducteur (10) qui se présente sous forme de spires, qui est logé dans une cassette (K) de forme sensiblement circulaire, auquel des conducteurs, poursuivant le circuit, peuvent être reliés aux deux positions terminales (6,8) et dont la longueur est sensiblement supérieure à la distance mutuelle des deux positions terminales (6,8), dispositif dans le cas duquel au moins l'une des deux positions terminales (6,8) est mobile par rapport à l'autre, dans le cas duquel la cassette (K) est constituée de deux parties disposées concentriquement l'une à l'autre, un rotor (11) qui peut tourner autour de l'axe de la cassette (K) et un stator (12), fixe et recevant le conducteur, dans le cas duquel est rapportée, aussi bien sur le rotor (11) que sur le stator (12), une couronne (15,16) de saillies, fermés en anneau et s'étendant selon la direction périphérique, dans le cas duquel rotor (11) et stator (12) sont, par coulissement axial l'un par rapport à l'autre, alternativement disposés en une position de montage de la cassette (K) d'une part et en une position de travail de cette cassette d'autre part, dans le cas duquel les deux couronnes (15,16) à saillies engrènent mutuellement en position de montage et dans le cas duquel les deux couronnes (15,16) à saillies se situent, en position de travail, dans des plans différents, sans engrènement mutuel, caractérisé par le fait que sur le rotor (11) est rapportée, à une certaine distance axiale de sa couronne (15) à saillies, une saillie périphérique (17), qui est orientée en direction du stator (12) et qui, dans la position de travail de la cassette (K), se situe entre les deux couronnes (15,16) à saillies et leur interdit d'engrener l'une avec l'autre.

2. Dispositif selon la revendication 1, caractérisé par le fait que sur le rotor (11) sont rapportés des éléments de crantage (18) pour sa fixation à la colonne de direction d'un véhicule dans la position de travail de la cassette (K).

3. Dispositif selon la revendication 1 ou 2, caractérisé par le fait que sur la face frontale du rotor (11) sont rapportées au moins deux saillies (25) en forme de barreau, décalés l'une de l'autre selon la direction périphérique de la cassette (K), s'écartant vers l'extérieur selon la direction axiale de la cassette et présentant des éléments élastiques (26,27) qui, la cassette (K) étant montée, se crantent, de manière amovible, dans des évidements correspondants (28) d'une pièce (B) posée sur la cassette (K).
